# EUROPÄISCHE PATENTSCHRIFT

(11) **EP 1 999 395 B1**
(45) Veröffentlichungstag und Bekanntmachung des Hinweises auf die Patenterteilung: **12.08.2009**
(21) Anmeldenummer: 07723642.0
(22) Anmeldetag: 27.03.2007
(51) Int. Cl.: F16D 69/04

(54) **BELAGTRÄGER FÜR BREMSEINRICHTUNGEN, INSBESONDERE TROMMELBREMSEN, TRÄGER-REIBBELAG-EINHEIT UND BELAGTRÄGERHALTER EINER PRESSVORRICHTUNG**
BACKING FOR BRAKE DEVICES, ESPECIALLY DRUM BRAKES, BACKING/FRICTION LINING UNIT AND BACKING SUPPORT OF A PRESSING DEVICE
SUPPORT DE GARNITURE DESTINÉ À DES DISPOSITIFS DE FREINAGE, NOTAMMENT À DES FREINS À TAMBOUR, UNITÉ SUPPORT-GARNITURE DE FREIN ET FIXATION DE SUPPORT DE GARNITURE D'UN DISPOSITIF DE COMPRESSION

(30) Priorität: 27.03.2006 DE 102006014406
(43) Veröffentlichungstag der Anmeldung: 10.12.2008
(73) Patentinhaber: TMD Friction Services GmbH, 51381 Leverkusen (DE)
(72) Erfinder: JUNGE, Klaus, 13465 Berlin (DE)
(74) Vertreter: Müller, Eckhard
(86) Internationale Anmeldenummer: PCT/EP2007/002696
(87) Internationale Veröffentlichungsnummer: WO 2007/110227

(56) Entgegenhaltungen:
- EP-A- 1 626 193
- GB-A- 306 269
- GB-A- 845 623
- GB-A- 2 311 569
- US-A- 2 139 409
- US-A- 4 569 424
- US-A1- 2005 161 297

## Beschreibung

Die Erfindung betrifft einen Belagträger einer Trommelbremse, gemäß dem Oberbegriff des Anspruchs 1. Die Erfindung betrifft ferner eine Träger-Reibbelag-Einheit gemäß dem Oberbegriff des Anspruchs 12 und einen Belagträgerhalter einer Pressvorrichtung zum Herstellen eines Reibbelages auf einem Belagträger gemäß dem Oberbegriff des Anspruchs 14.

### Technologischer Hintergrund

Bremsbeläge können auf unterschiedliche Art und Weise auf dem Belagträger der Bremsvorrichtung befestigt werden. Bei Trommelbremsen wird der Bremsbelag heute üblicherweise auf den meist metallischen Belagträger aufgeklebt und/oder mittels Nieten fixiert. Eine Befestigung des Bremsbelages auf dem Belagträger ist auch durch direktes Verpressen von Reibmaterial auf dem Belagträger möglich, wobei in diesem Fall vor dem Verpressen ein Kleber auf den Belagträger aufgebracht werden muss.

### Stand der Technik

Ein Belagträger der hier angesprochenen Art ist aus der DE 2 423 870 A bekannt. Der Belagträger ist dort Teil einer Bremsbacke, bei der der Reibbelag durch Aufgießen beziehungsweise Aufspritzen auf den Belagträger gebildet wird.

Um die Verbindung zwischen dem Belagträger und dem Reibbelag zu verbessern, weist der bekannte Belagträger Öffnungen auf, in welche beim Herstellen des Reibbelages Reibmaterial einfließt und dadurch in die Öffnungen eingreifende Befestigungselemente des Reibbelages gebildet sind. Die Öffnungen des Belagträgers können durch Einstoßen erzeugt sein oder es kann der Belagträger durch ein perforiertes Blech gebildet sein.

Bei dem bekannten Belagträger ist durch die Öffnungen zwar eine Verbesserung der Verbindungswirkung zwischen dem Reibbelag und der Belagträgerplatte erreicht, die beim Aufgießen beziehungsweise Aufspritzen des Reibbelages erzeugte mechanische Verankerung des Reibbelages auf dem Belagträger ist jedoch noch nicht zufrieden stellend.

Ein ähnlicher Belagträger ist aus der US 4 569 424 bekannt. Der bekannte Belagträger ist für den Einsatz in einer Trommelbremse vorgesehen und weist eine Trägerfläche zur Aufnahme wenigstens eines Reibbelages sowie eine Vielzahl auf der Trägerfläche angeordneter Vorsprünge auf. Die Vorsprünge sind durch Herausschneiden einer Kontur aus dem Belagträger und Umbiegen der Kontur an einer Biegekante erzeugt. Die Vorsprünge sind in Richtung des Reibbelages ausgerichtet und dringen in den Reibbelag ein. Dadurch soll eine mechanische Verankerung des Reibbelages auf dem Belagträger hergestellt werden.

Bei dem bekannten Belagträger kann das Problem auftreten, dass beim Bremsen mit fast verschlissenem Reibbelag die Vorsprünge bereits an der mit dem Reibbelag korrespondierenden Gegenreibfläche schleifen. Dabei können tiefe Riefen in der Gegenreibfläche entstehen, durch welche die Bremsfunktion erheblich beeinträchtigt sein kann.

Ein weiterer Belagträger ist aus der US 5 413 194 bekannt. Auch dort weist der Belagträger wenigstens eine Öffnung auf, in welche Reibmaterial eindringt und eine mechanische Verankerung des Reibbelages auf den Belagträger bildet. Es wird dort eine Belagträger-Reibbelag-Einheit hergestellt, indem Reibmaterial auf den Belagträger aufgepresst wird und dabei das Reibmaterial durch die Öffnungen hindurchtritt und auf der dem Reibbelag abgewandten Seite des Belagträgers beim Verpressen zu einer Dämpfungsschicht geformt wird. Hierzu ist der Belagträger auf einen entsprechenden Belagträgerhalter aufgesetzt, welcher eine Ausnehmung für das durch die Öffnungen hindurchtretende Reibmaterial aufweist, welche eine Pressmatrize für die zu bildende Dämpfungsschicht bildet.

### Aufgabenstellung

Davon ausgehend liegt der Erfindung die Aufgabe zu Grunde, einen Belagträger mit den eingangs genannten Merkmalen bereit zustellen, durch den eine Belagträger-Reibbelag-Einheit realisierbar ist, welche dauerhaft ein betriebssicheres und störungsfreies Bremsen ermöglicht. Weiterhin soll ein Belagträgerhalter für eine Pressvorrichtung vorgeschlagen werden, mittels welcher der Reibbelag auf jenem Belagträger herstellbar ist.

### Erfindung und vorteilhafte Wirkungen

Zur Lösung der Aufgabe wird ein Belagträger vorgeschlagen, welcher die in Anspruch 1 genannten Merkmale aufweist. Der Belagträger zeichnet sich unter anderem dadurch aus, dass der Materialabschnitt von dem Belagträger in einem vorgegeben Winkel α in Pressrichtung absteht.

Indem der Materialabschnitt von dem Belagträger in Pressrichtung absteht, kann vermieden werden, dass der Materialabschnitt beim Pressen aufgrund der wirkenden Presskraft in die Öffnung gedrückt wird und dadurch die von Öffnung und Materialabschnitt gebildete Pressmatrize ungewollt verschlossen ist. Indem dabei der Materialabschnitt in einem vorgegebenen Winkel α zum Belagträger steht, ist es möglich, dass das beim Pressvorgang durch die Matrize hindurchtretende Reibmaterial gezielt hinsichtlich der hindurch gepressten Menge sowie seines Verdichtungsgrades eingestellt werden kann, und insofern auf eine vorgegebene Presskraft anzupassen ist. Es kann dadurch die Festigkeit bzw. Haltbarkeit des Reibmaterials in der Pressmatrize, also im Bereich von Materialabschnitt und Öffnung, vorgegeben werden und insofern die Stärke der mechanischen Verankerung in diesem Bereich beeinflusst werden.

Es ist damit auf einfache und kostengünstige Weise eine Belagträger-Reibbelag-Einheit realisierbar, bei der ein Ablösen des Reibbelages vom Belagträger auch bei extremer Belastung vermieden ist, wodurch dauerhaft ein betriebssicheres und störungsfreies Bremsen gewährleistet ist.

Indem der wenigstens eine Materialabschnitt derart gegenüber dem Belagträger umgeformt ist, dass bei einem Verpressen des Reibbelages auf die Trägerfläche der Materialabschnitt zusammen mit der Öffnung eine Pressmatrize bilden, kommt dem Materialabschnitt beim Verpressen des Reibbelages auf den Belagträger eine Funktion zu. Denn es ermöglicht der Materialabschnitt zusammen mit der Öffnung eine mechanische Verankerung des Reibbelages, indem Reibmaterial in die durch Materialabschnitt und Öffnung gebildete Pressmatrize hinein gepresst wird. Damit erfolgt die mechanische Verankerung auf eine andere Weise als bei solchen bekannten Belagträgern, bei denen die Materialabschnitte als in den Reibbelag eindringende Vorsprünge ausgebildet sind.

Vorzugsweise sollte der Winkel α zwischen Belagträger und Materialabschnitt zwischen 10° und 60° liegen. In diesem Bereich wirkt der Materialabschnitt zusammen mit der Öffnung besonders gut als Pressmatrize.

Das Reibmaterial ist hinsichtlich der hindurchtretenden Menge und Verdichtung optimal, wenn der Winkel α zwischen 25° und 45° liegt.

Mit Vorteil ist der Winkel α veränderbar. Dadurch kann mittels Änderung der Winkelstellung des Materialabschnittes zum Belagträger die Durchflussmenge sowie die Dichte des durch die Pressmatrize tretenden Reibmaterials auf die jeweils wirkende Presskraft eingestellt bzw. reguliert werden.

Nach einer Ausgestaltung der Erfindung ist es vorgesehen, dass mehrere Öffnungen und Materialabschnitte vorgesehen sind, um dadurch eine höhere mechanische Verankerung des Reibbelages auf den Belagträger zu erzielen.

Herstellungstechnisch einfach zu realisieren ist es, wenn die Materialabschnitte in wenigstens einer Reihe angeordnet sind.

In die gleiche Richtung zielt die Maßnahme, dass in der Reihe die Anordnung von Materialabschnitt und zugehöriger Öffnung im wesentlichen gleich sind.

Das gleiche gilt auch, wenn wenigstens zwei Reihen vorgesehen sind, mit gleichläufiger Anordnung von Öffnung und zugehörigem Materialabschnitt.

Alternativ kann es auch vorgesehen sein, dass wenigstens zwei Reihen vorgesehen sind, mit gegenläufiger Anordnung von Öffnung und zugehörigem Materialabschnitt.

Eine weitere Ausgestaltung der Erfindung sieht vor, dass die Öffnungen zumindest im Randbereich des Reibbelages angeordnet sind und vorzugsweise an den Rand des Reibbelages angrenzen. Dadurch kann ein Eindringen von Feuchtigkeit zwischen Reibbelag und Trägerfläche des Belagträgers und damit ein dadurch ausgelöstes Ablösen des Reibbelages von der Trägerfläche vermieden werden.

Mit Vorteil ist es vorgesehen, dass die wenigstens eine Reihe bzw. die wenigstens zwei Reihen in Richtung der Längsachse des Belagträgers verlaufen. Hierdurch lassen sich die Reihen herstellungstechnisch mit weniger Aufwand realisieren, da ein mehrmaliges Verfahren der Werkzeuge zum Herstellen von Öffnung und Materialabschnitt dadurch nicht erforderlich ist.

Dabei bietet es sich an, dass der wenigstens eine Materialabschnitt als Lasche ausgebildet ist, dessen Kontur vorzugsweise mittels Trennverfahren, insbesondere Stanzen oder Schneiden, erzeugt ist. Hierdurch ist der Materialabschnitt herstellungstechnisch in einfacher Weise und mit wenig Aufwand realisierbar.

Der Belagträger kann gekrümmt ausgebildet sein. Die gekrümmte Ausbildung des Belagträgers ermöglicht den Einsatz in Trommelbremsen.

Weiterhin wird zur Lösung der Aufgabe eine Träger-Reibbelag-Einheit vorgeschlagen mit einem, wenigstens eine Öffnung aufweisenden Belagträger und einem auf den Belagträger durch Pressen von Reibmaterial erzeugten Reibbelag, wobei das Reibmaterial durch die Öffnung hindurch gepresst und zu einer den Reibbelag in der Öffnung haltenden Formschlusselement geformt ist. Durch diese Maßnahme ist eine besonders starke mechanische Verankerung des Reibbelages auf den Belagträger erzeugt.

Nach einer Ausgestaltung der Erfindung ist es vorgesehen, dass das Formschlusselement eine in die Öffnung überragende Verdickung, vorzugsweise in Art eines Nietkopfes, aufweist. Hierdurch ist ein besonders wirkungsvolles Formschlußelement realisiert, durch welches der von Öffnung und Materialabschnitt gebildete Durchgang vollumfänglich überragt werden kann.

Darüber hinaus wird zur Lösung der Aufgabe ein Belagträgerhalter einer Pressvorrichtung vorgeschlagen, auf den ein Belagträger aufsetzbar ist, mit wenigstens einer Ausnehmung, welche mit einer Öffnung des Belagträgers korrespondiert. Der Belagträgerhalter zeichnet sich unter anderem dadurch aus, dass die Ausnehmung zum Aufnehmen des zur Öffnung zugehörigen Materialabschnittes des Belagträgers ausgebildet ist.

Dadurch ist auf einfache und kostengünstige Weise die Vorraussetzung geschaffen, dass die Öffnung mit dem dazugehörigen Materialabschnitt des Belagträgers beim Pressvorgang als Pressmatrize für das Reibmaterial wirken kann und insofern die mechanische Verankerung des Reibbelages auf dem Belagträger erzeugt ist. Insofern ist es durch den Belagträgerhalter ermöglicht, eine Belagträger-Reibbelag-Einheit herzustellen, welche dauerhaft ein betriebssicheres und störungsfreies Bremsen gewährleistet.

Mit Vorteil weist die wenigstens eine Ausnehmung eine Anlagefläche für den Materialabschnitt des Belagträgers auf. Hierdurch wird der Materialabschnitt beim Pressvorgang gezielt in eine vorgegebene Position in der Ausnehmung des Belagträgerhalters gebracht und damit die durch die Öffnung und den Materialabschnitt gebildete Pressmatrize auf einer vorgegebenen Form gehalten.

Vorzugsweise sollte dabei die Anlagefläche für den Materialabschnitt in einem vorgegebenen Winkel α zur Berandungsfläche der Öffnung angeordnet sein. Dadurch ist die durch die Öffnung hindurch gepresste Menge an Reibmaterial auf einen vorgegebenen Wert einstellbar, so dass sich die Stärke der mechanischen Verankerung des Reibbelages auf dem Belagträger in Abhängigkeit der Presskraft auf ein vorgebbares Maß einstellen lässt.

Nach einer weiteren Ausgestaltung des Belagträgerhalters ist es vorgesehen, dass die wenigstens eine Ausnehmung derart ausgebildet ist, dass beim Pressvorgang durch die Öffnung hindurchgedrücktes Reibmaterial zu einem den Reibbelag formschlüssig an dem Belagträger haltenden Formschlusselement formbar ist.

Hierdurch kann in einfacher und kostengünstiger Weise die mechanische Verankerung zusammen mit der Bildung des Formschlußelementes erzeugt werden, indem dies mit einem Pressvorgang erreicht wird. Bei diesem Pressvorgang wird also das Reibmaterial zum einen zur Bildung des Reibbelages und zum anderen für die mechanische Verankerung des Reibbelages an dem Belagträger genutzt.

Nach einer weiteren Ausgestaltung der Erfindung ist es vorgesehen, dass die wenigstens eine Ausnehmung zum Formen einer die Öffnung des Belagträgers überragenden Verdickung, insbesondere Nietkopf, ausgebildet ist. Eine solche Ausnehmung ist einfach herstellbar.

### Ausführungsbeispiele

Weitere Vorteile und Anwendungsmöglichkeiten der vorliegenden Erfindung ergeben sich aus der nachfolgenden Beschreibung verschiedener Ausführungsbeispiele anhand der Zeichnung.

Es zeigen:
- Figur 1: ein Ausführungsbeispiel einer Belagträgerplatte mit darauf aufgebrachtem Reibbelag für eine Trommelbremse gemäß dem Stand der Technik in Seitenansicht,
- Figur 2: eine mögliche Ausführungsform des erfindungsgemäßen Belagträgers mit darauf aufgebrachtem Reibbelag im Längsschnitt,
- Figur 3: der Belagträger gemäß Figur 2 in Draufsicht,
- Figur 4: der Belagträger gemäß Figur 2 als Querschnittsdarstellung entlang der Schnittlinie A-A,
- Figur 5: eine mögliche Ausführungsform einer Pressvorrichtung zum Herstellen eines Reibbelages auf dem Belagträger gemäß Figur 2 im Längsschnitt und
- Figur 6: die Pressvorrichtung gemäß Figur 5 als Querschnittsdarstellung entlang der Schnittlinie B-B.

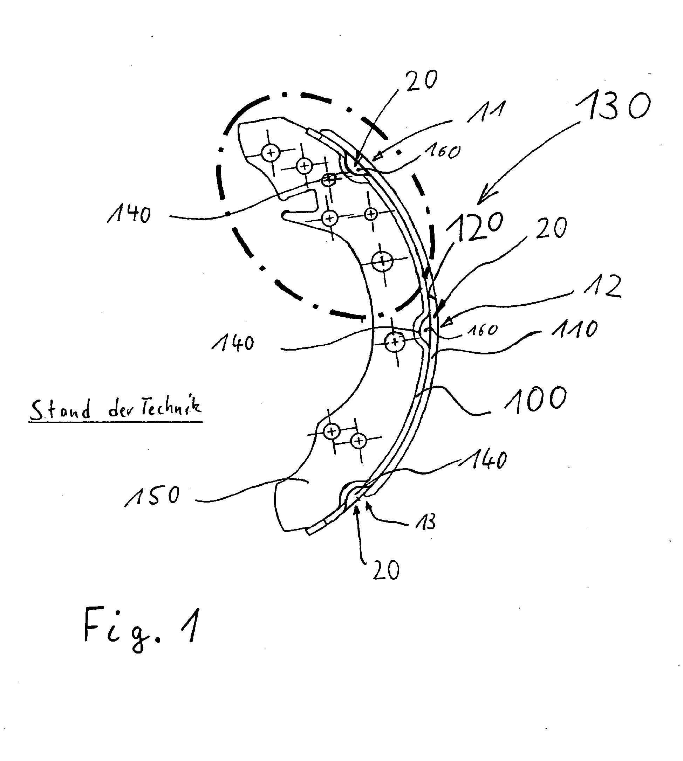

Figur 1 zeigt - in schematischer Darstellung - ein Ausführungsbeispiel einer Träger-Reibbelag-Einheit 130, wie sie bereits aus dem Stand der Technik bekannt ist. Die Träger-Reibbelag-Einheit 130 ist für den Einsatz in einer Trommelbremse vorgesehen und weist eine gekrümmte Belagträgerplatte 100 und einen auf die Trägerfläche 120 der Belagträgerplatte 100, vorzugsweise mittels Kleben, aufgebrachten Reibbelag 110 auf.

Die Belagträgerplatte 100 ist bei dem Ausführungsbeispiel gemäß Figur 1 mit einer Bremsbacke 150 fest verbunden, vorzugsweise aus einem Stück geformt. Die Belagträgerplatte 100 weist entlang ihrer Längsseiten eine Seitenführung 20 auf, mittels welcher beim Bremsvorgang eine geführte Bewegung der Belagträgerplatte 100 an den (nicht dargestellten) Wandungen der (nicht dargestellten) Bremsvorrichtung, wie beispielsweise einer Bremstrommel, erfolgt. Die Seitenführung 20 ist durch in Querrichtung in die Trägerfläche 120 der Belagträgerplatte 100 eingebrachte Sicken 140 realisiert, durch deren Kontur an den Längsseiten der Belagträgerplatte 100 die Seitenführung 20 gebildet ist.

Wie in Figur 1 ersichtlich, befindet sich dort, wo jeweils eine Sicke 140 angeordnet ist, ein Hohlraum 160 zwischen der Belagträgerplatte 100 und dem darauf aufgebrachten Reibbelag 110.

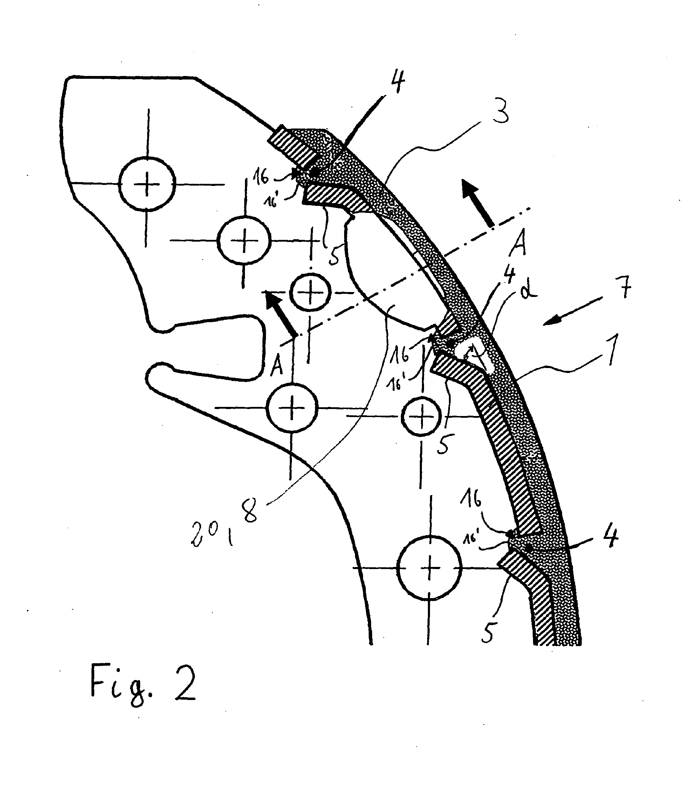

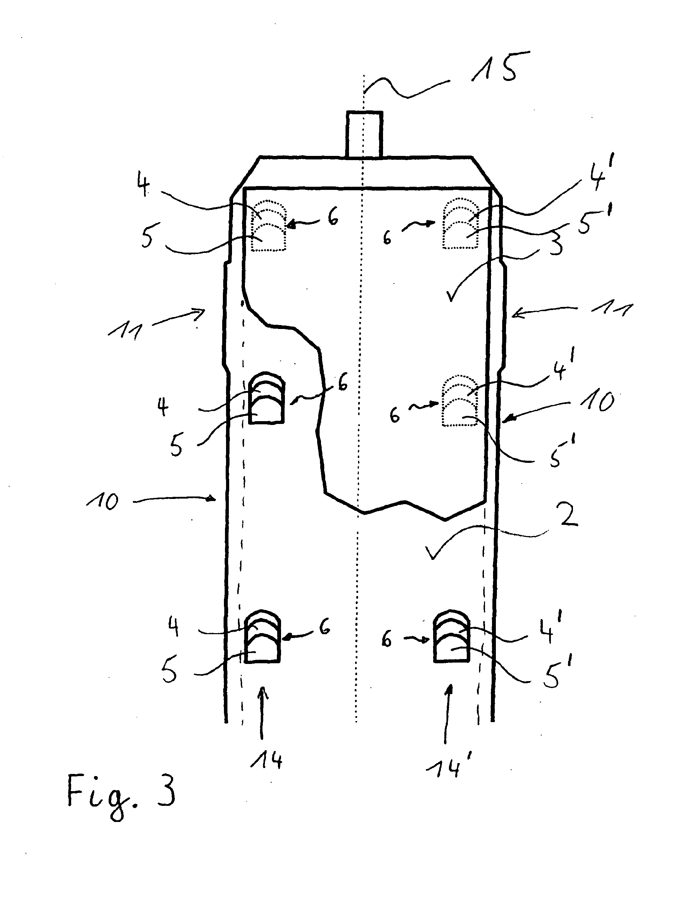

Die Figuren 2, 3 und 4 zeigen eine mögliche Ausführungsform einer erfindungsgemäßen Träger-Reibbelag-Einheit 30 in unterschiedlichen Ansichten. Die Träger-Reibbelag-Einheit 30 weist ebenfalls, wie die bekannte Träger-Reibbelag-Einheit 130 gemäß Figur 1, einen Belagträger 1 mit einer Trägerfläche 2 und einem darauf aufgebrachten Reibbelag 3 auf. Dabei ist aus den Figuren 2 und 3 die erfindungsgemäße Träger-Reibbelag-Einheit 30 lediglich entsprechend des in Figur 1 mit strichpunktierter Linie markierten Abschnitts dargestellt.

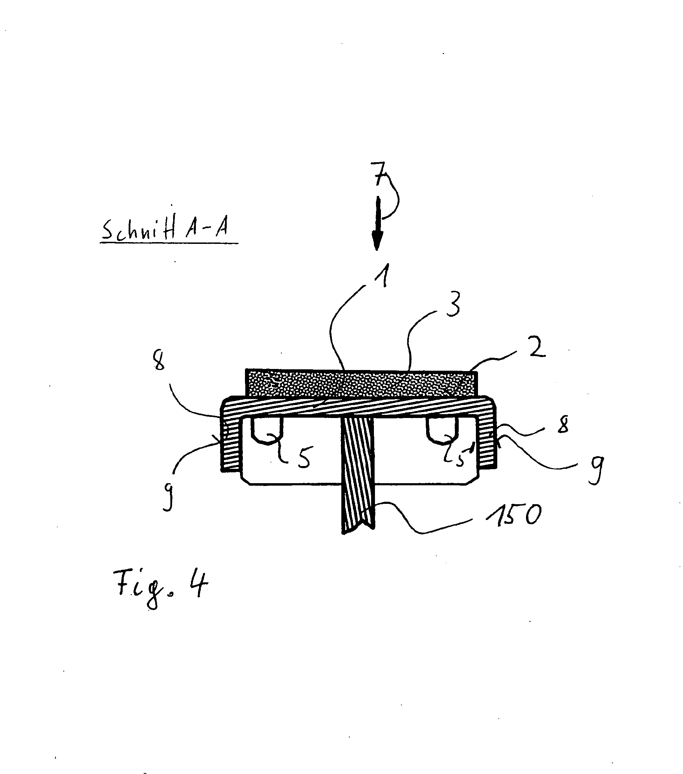

Die Träger-Reibbelag-Einheit 30 unterscheidet sich von der bekannten Träger-Reibbelag-Einheit 130 gemäß Figur 1 u. a. bereits dadurch, dass die Seitenführung 20 durch Biegen, vorzugsweise Abkanten, des Randes 8 der Belagträgerplatte 1 gebildet ist, wie insbesondere in Figur 4 ersichtlich ist. Dabei bildet der umgebogene Rand mit seiner nach außen gerichteten Fläche 9 eine Gleitfläche, durch welche der Belagträger 1 an dem (nicht dargestellten) Gehäuse der (nicht dargestellter) Bremseinrichtung geführt, bewegbar ist.

Bei dem Ausführungsbeispiel gemäß der Figuren 2 bis 4 ist der umgebogene Rand 8 an wenigstens einem, vorzugsweise an wenigstens 3 Randabschnitten 11, 12, 13 der jeweiligen Längsseite 10 der Belagträgerplatte 1 jeweils in Art einer Lasche gebildet, welche von dem Reibbelag 3 weggerichtet angeordnet ist.

Die Randabschnitte 11, 12, 13 sind verteilt über die Länge der Längsseite 10, vorzugsweise in äquidistantem Abstand, angeordnet.

Das Ausführungsbeispiel der Träger-Reibbelag-Einheit 30 gemäß der Figuren 2 bis 4 unterscheidet sich erfindungsgemäß von der bekannten Träger-Reibbelag-Einheit 130 ferner u. a. dadurch, dass dort der Reibbelag 3 durch Verpressen eines Reibmaterials auf die Trägerfläche 2 des Belagträgers 1 hergestellt ist, wobei Reibbelag 3 und Belagträger 1 lediglich durch eine mechanische Verankerung miteinander fixiert sind. Die Verwendung eines Klebers oder von Nieten zum Befestigen des Reibbelages auf dem Belagträger ist bei der erfindungsgemäßen Träger-Reibbelag-Einheit 30 nicht erforderlich, kann aber grundsätzlich auch erfolgen.

Die mechanische Verankerung des Reibbelages 3 auf der Trägerfläche 2 wird durch wenigstens eine, innerhalb der Trägerfläche 2 angeordnete Öffnung 4 bzw. 4' gebildet, welche durch Umformen, vorzugsweise Biegen, eines Materialabschnittes 5 bzw. 5' des Belagträgers 1 erzeugt ist. Dabei ist der wenigstens eine Materialabschnitt 5 bzw. 5' als Lasche ausgebildet, dessen Kontur vorzugsweise mittels Trennverfahren, insbesondere Stanzen oder Schneiden, hergestellt wird.

Der Materialabschnitt 5 bzw. 5' steht von dem Belagträger 1 in Pressrichtung 7 ab und bildet zusammen mit der Öffnung 4 bzw. 4' eine Pressmatrize 6.

Durch die Pressmatrize 6 wird beim Verpressen des Reibmateriales auf der Trägerfläche des Belagträgers 1 Reibmaterial durch die Öffnung 4 bzw. 4' hindurchgepresst und zu einem den Reibbelag 3 in der Öffnung 4 bzw. 4' haltenden Formschlusselement 16 geformt.

Das Formschlusselement 16 weist bei dem hier vorliegenden Ausführungsbeispiel eine Verdickung 16' in Art eines Nietkopfes geformt, so dass durch den Nietkopf eine Formschlussverbindung zwischen dem aus dem Reibmaterial gepressten Reibbelag 3 und dem Belagträger 1 hergestellt ist.

Die Haltbarkeit dieser Formschlussverbindung ist wesentlich durch die Winkelstellung des Materialabschnittes 5 gegenüber dem Belagträger 1 beeinflussbar. Bei dem Ausführungsbeispiel gemäß der Figuren 2 bis 4 ist der Materialabschnitt 5 in einem vorgegebenen Winkel α zur Belagträgerplatte 1 angeordnet, wobei der Winkel α zwischen 25 und 45 Grad liegt. Grundsätzlich kann der Winkel α zwischen 10° und 60° liegen. Durch die Winkelstellung des Materialabschnittes 5 gegenüber dem Belagträger 1 kann beispielsweise die beim Verpressen des Reibmateriales durch die Pressmatrize 6 hindurchtretende Reibmaterialmenge sowie deren Dichte beeinflusst bzw. reguliert werden.

Bei dem Ausführungsbeispiel gemäß der Figuren 2 bis 4 sind mehrere Öffnungen 4, 4' und Materialabschnitte 5, 5' vorgesehen, welche in wenigstens einer Reihe, vorzugsweise in wenigstens zwei Reihen 14, 14' angeordnet sind. In jeder Reihe 14 bzw. 14' ist die Anordnung von Materialabschnitt 5 bzw. 5' und zugehöriger Öffnung 4 bzw. 4' im Wesentlichen gleich. Die Anordnung von Öffnung 4 bzw. 4' und zugehörigem Materialabschnitt 5 bzw. 5' zwischen den beiden Reihen 14, 14' ist gleichgerichtet, wobei die beiden Reihen 14, 14' in Richtung der Längsachse 15 des Belagträgers 1 verlaufen.

Bevorzugt sind die Öffnungen 4, 4' zumindest im Randbereich des Reibbelages 3 angeordnet. Ebenfalls bevorzugt grenzen die Öffnungen 4, 4' an den Rand des Reibbelags 3 an.

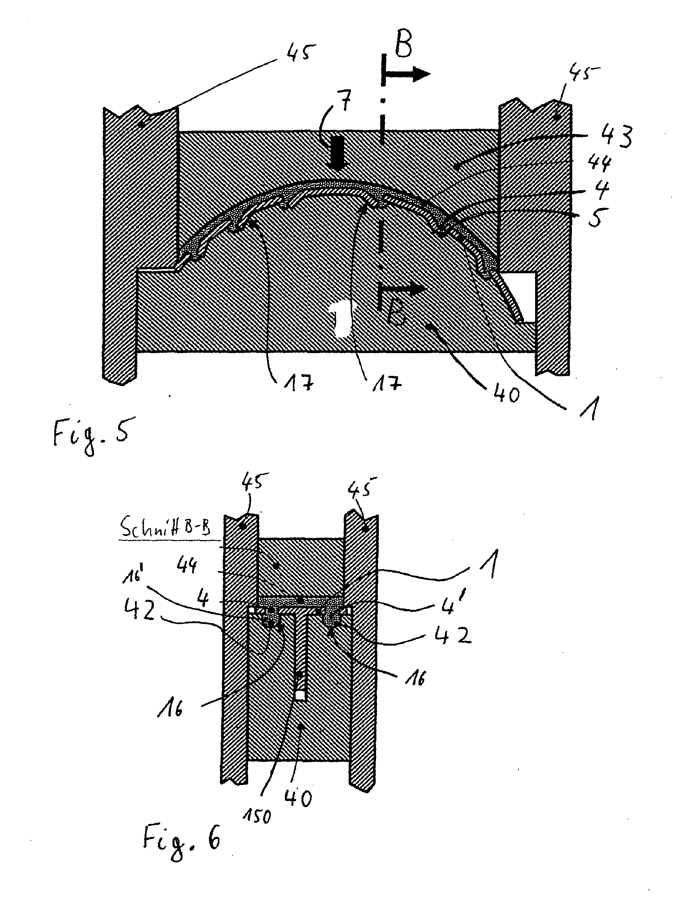

Die Figuren 5 und 6 zeigen eine mögliche Ausführungsform einer Pressvorrichtung 41 zum Herstellen des Reibbelages 3 auf dem Belagträger 1. Die Pressvorrichtung 41 weist einen Belagträgerhalter 40 auf, auf dem der Belagträger 1 aufsetzbar ist. Ferner weist die Pressvorrichtung 41 einen Pressstempel 43 auf, durch welchen die Presskraft auf das Reibmaterial zum Formen des Reibbelages 3 aufgebracht wird. Der Belagträgerhalter 40 sowie der Pressstempel 43 sind jeweils seitlich an einer Führung 45 geführt.

Der Belagträgerhalter 40 weist wenigstens eine Ausnehmung 42 auf, welche mit einer entsprechenden Öffnung 4 bzw. 4' des Belagträgers 1 korrespondiert und durch welche beim Pressvorgang durch die Öffnung 4 bzw. 4' hindurchgedrücktes Reibmaterial zu einer den Reibbelag 3 formschlüssig in der Öffnung 4 bzw. 4' haltenden Verdickung in Art eines Nietkopfes 16' formbar ist.

Die Ausnehmung 42 des Belagträgerhalters 40 ist zum Aufnehmen des zu Öffnung 4 bzw. 4' zugehörigen Materialabschnittes 5, 5' des Belagträgers 1 ausgebildet. Vorzugsweise weist die wenigstens eine Ausnehmung 42 dazu eine Anlagefläche 17 für den Materialabschnitt 5 bzw. 5' des Belagträgers 1 auf. Vorzugsweise sollte jene Anlagefläche 17 in einem vorgegebenen Winkel zur Berandungsfläche der Öffnung 4 bzw. 4' angeordnet sein. Bevorzugt entspricht dabei dieser vorgegebene Winkel dem vorgegebenen Winkel α, in welchem der Materialabschnitt 5 bzw. 5' von dem Belagträger 1 in Pressrichtung 7 steht.

Mittels der Pressvorrichtung 41 kann ein Verfahren zum Herstellen des Reibbelages 3 auf dem Belagträger 1 wie folgt durchgeführt werden: Das Reibmaterial 44 wird mittels des Pressstempels 43 auf den Belagträger 1 und durch die Öffnungen 4, 4' im Belagträger 1 hindurch in entsprechende Ausnehmungen 42 des Belagträgerhalters 40 gepresst. Unter der Presskraft wird dabei das Reibmaterial 44 in den Ausnehmungen 42 jeweils zu einer die Öffnungen 4, 4' überragenden Verdickung 16' in Art eines Nietkopfes geformt, durch welche eine Formschlussverbindung des durch das Verpressen gebildeten Reibbelages 3 mit dem Belagträger 1 erzeugt ist.

### Bezugszeichenliste

- 1: Belagträger, Belagträgerplatte
- 2: Trägerfläche
- 3: Reibbelag
- 4, 4': Öffnung
- 5, 5': Materialabschnitt
- 6: Pressmatrize
- 7: Pressrichtung
- 8: Rand
- 9: Außenfläche
- 10: Längsseiten
- 11: Randabschnitt
- 12: Randabschnitt
- 13: Randabchnitt
- 14, 14': Reihe
- 15: Längsachse
- 16: Verdickung, Nietkopf
- 17: Anlagefläche
- 20: Seitenführung
- 30: Träger-Reibbelag-Einheit
- 40: Belagträgerhalter
- 41: Pressvorrichtung
- 42: Ausnehmung
- 43: Pressstempel
- 44: Reibmaterial
- 45: Führungen
- 100: Belagträger
- 110: Reibbelag
- 120: Trägerfläche
- 130: Träger-Reibbelag-Einheit
- 140: Sicken
- 150: Bremsenteil, Bremsbacke
- 160: Hohlraum

## Patentansprüche

1. Belagträger (1) einer Trommelbremse, mit einer Trägerfläche (2) zur Aufnahme wenigstens eines Reibbelages (3) und wenigstens einer, innerhalb der Trägerfläche (2) angeordneten Öffnung (4, 4'), welche durch Umformen, vorzugsweise Biegen, eines Materialabschnittes (5, 5') des Belagträgers (1) erzeugt ist, wobei der Materialabschnitt (5, 5') derart gegenüber dem Belagträger (1) umgeformt ist, dass bei einem Verpressen des Reibbelages (3) auf die Trägerfläche (2) der Materialabschnitt (5, 5') zusammen mit der Öffnung (4, 4') eine Pressmatrize (6) bilden, **dadurch gekennzeichnet, dass** der Materialabschnitt (5, 5') von dem Belagträger (1) in einem vorgegebenen Winkel α in Pressrichtung (7) absteht.

2. Belagträger nach Anspruch 1, **dadurch gekennzeichnet, dass** der vorgegebene Winkel α zwischen Belagträger (1) und Materialabschnitt (5, 5') zwischen 10° und 60°, vorzugsweise zwischen 25° und 45° liegt.

3. Belagträger nach Anspruch 1 oder 2, **dadurch gekennzeichnet, dass** der Winkel α veränderbar ist.

4. Belagträger nach einem der vorhergehenden Ansprüche, **dadurch gekennzeichnet, dass** mehrere Öffnungen (4; 4') und Materialabschnitte (5; 5') vorgesehen sind, welche vorzugsweise in wenigstens einer Reihe (14; 14') angeordnet sind.

5. Belagträger nach Anspruch 4, **dadurch gekennzeichnet, dass** in der Reihe (14; 14') die Anordnung von Materialabschnitt (5; 5') und zugehöriger Öffnung (4, 4') im wesentlichen gleich ist.

6. Belagträger nach Anspruch 4 oder 5, **dadurch gekennzeichnet, dass** wenigstens zwei Reihen (14, 14') mit gleichläufiger Anordnung von Öffnung (4, 4') und zugehörigerem Materialabschnitt (5, 5') vorgesehen sind.

7. Belagträger nach Anspruch 4 oder 5**, dadurch gekennzeichnet, dass** wenigstens zwei Reihen vorgesehen sind, mit gegenläufiger Anordnung von Öffnung und zugehörigerem Materialabschnitt.

8. Belagträger nach einem der Ansprüche 4 bis 7, **dadurch gekennzeichnet, dass** die Öffnungen (4, 4') zumindest im Randbereich des Reibbelages (3) angeordnet sind und vorzugsweise an den Rand des Reibbelages (3) angrenzen.

9. Belagträger nach einem der Ansprüche 4 bis 8, **dadurch gekennzeichnet, dass** die wenigstens eine Reihe (14; 14') bzw. die wenigstens zwei Reihen (14, 14') in Richtung der Längsachse (15) des Belagträgers (1) verläuft.

10. Belagträger nach einem der vorhergehenden Ansprüche, **dadurch gekennzeichnet, dass** der wenigstens eine Materialabschnitt (5; 5') als Lasche ausgebildet ist, dessen Kontur vorzugsweise mittels Trennverfahren, insbesondere Stanzen oder Schneiden, erzeugt ist.

11. Belagträger nach einem der vorhergehenden Ansprüche, **dadurch gekennzeichnet, dass** er gekrümmt ausgebildet ist.

12. Träger-Reibbelag-Einheit (30) einer Trommelbremse mit einem, wenigstens eine Öffnung (4, 4') aufweisenden Belagträger (1) nach einem der vorhergehenden Ansprüche, und einem auf den Belagträger (1) durch Pressen von Reibmaterial erzeugten Reibbelag (3), **dadurch gekennzeichnet, dass** Reibmaterial durch die Öffnung (4, 4') hindurch gepresst und zu einem den Reibbelag (3) formschlüssig an dem Belagträger (1) haltenden Formschlusselement (16) geformt ist.

13. Träger-Reibbelag-Einheit nach Anspruch 12, **dadurch gekennzeichnet, dass** das Formschlusselement (16) eine die Öffnung (4, 4') überragende Verdickung, vorzugsweise in Art eines Nietkopfes (16'), aufweist.

14. Belagträgerhalter (40) einer Pressvorrichtung zum Herstellen eines Reibbelages (3) auf einem Belagträger, wobei auf den Belagträgerhalter (40) ein Belagträger (1) nach einem der Ansprüche 1 bis 11 aufsetzbar ist und der Belagträgerhalter (40) wenigstens eine Ausnehmung (42) aufweist, welche mit einer Öffnung (4; 4') des Belagträgers (1) korrespondiert, **dadurch gekennzeichnet, dass** die Ausnehmung (42) zum Aufnehmen des zur Öffnung (4; 4') zugehörigen Materialabschnittes (5, 5') des Belagträgers (1) ausgebildet ist.

15. Belagträgerhalter nach Anspruch 14, **dadurch gekennzeichnet, dass** die wenigstens eine Ausnehmung (42) eine Anlagefläche (17) für den Materialabschnitt (5, 5') des Belagträgers (1) aufweist, welche vorzugsweise in einem vorgegebenen Winkel zur Berandungsfläche der Öffnung (4; 4') angeordnet ist.

16. Belagträgerhalter nach Anspruch 14 oder 15, **dadurch gekennzeichnet, dass** die wenigstens eine Ausnehmung (42) derart ausgebildet ist, dass beim Pressvorgang durch die Öffnung (4, 4') hindurch gedrücktes Reibmaterial zu einem den Reibbelag (3) formschlüssig an dem Belagträger (1) haltenden Formschlusselement (16) formbar ist.

17. Belagträgerhalter nach Anspruch 15 oder 16, **dadurch gekennzeichnet, dass** die wenigstens eine Ausnehmung (42) zum Formen einer die Öffnung (4; 4') des Belagträgers (1) überragenden Verdickung, vorzugsweise Nietkopf (16'), ausgebildet ist.

## Claims

1. Lining carrier (1) of a drum brake, with a carrier surface (2) for reception of at least one friction lining (3) and at least one opening (4, 4'), which is arranged within the carrier surface (2) and which is produced by deforming, preferably bending, a material section (5, 5') of the lining carrier (1), wherein the material section (5, 5') is so deformed relative to the lining carrier (1) that on pressing of the lining carrier (3) onto the carrier surface (2) the material section (5, 5') forms, together with the opening (4, 4'), a press die (6), **characterised in that** the material section (5, 5') protrudes from the lining carrier (1) at a predetermined angle α in pressing direction (7).

2. Lining carrier according to claim 1, **characterised in that** the predetermined angle α between lining carrier (1) and material section (5, 5') is between 10° and 60°, preferably between 25° and 45°.

3. Lining carrier according to claim 1 or 2, **characterised in that** the angle α is variable.

4. Lining carrier according to any one of the preceding claims, **characterised in that** several openings (4; 4') and material sections (5; 5') are provided, which are preferably arranged in at least one row (14; 14').

5. Lining carrier according to claim 4, **characterised in that** the arrangement of material section (5; 5') and associated opening (4, 4') is substantially equal in the row (14; 14').

6. Lining carrier according to claim 4 or 5, **characterised in that** at least two rows (14, 14') with an arrangement of opening (4, 4') and associated material section (5, 5') in the same sense are provided.

7. Lining carrier according to claim 4 or 5, **characterised in that** at least two rows with an arrangement of opening and associated material section in opposite sense are provided.

8. Lining carrier according to any one of claims 4 to 7, **characterised in that** the openings (4, 4') are arranged at least in the edge region of the friction lining (3) and preferably adjoin the edge of the friction lining (3).

9. Lining carrier according to any one of claims 4 to 8, **characterised in that** the at least one row (14; 14') or the at least two rows (14, 14') run in the direction of the longitudinal axis (15) of the lining carrier (1).

10. Lining carrier according to any one of the preceding claims, **characterised in that** the at least one material section (5; 5') is constructed as a strap, the contour of which is produced preferably by means of a separating method, particularly punching or cutting.

11. Lining carrier according to any one of the preceding claims, **characterised in that** it is constructed to be curved.

12. Carrier and friction lining unit (30) of a drum brake with a lining carrier (1), which has at least one opening (4, 4'), according to any one of the preceding claims, and a friction lining (3) produced on the lining carrier (1) by pressing friction material, **characterised in that** friction material is pressed through the opening (4, 4') and formed into a shape-locking element (16) mechanically positively retaining the friction lining (3) at the lining carrier (1).

13. Carrier and friction lining unit according to claim 12, **characterised in that** the shape-locking element (16) has a thickness, preferably in the form of a rivet head (16') protruding beyond the opening (4, 4').

14. Lining carrier holder (40) of a press device for producing a friction lining (3) on a lining carrier, wherein a lining carrier (1) according to any one of claims 1 to 11 is placeable on the lining carrier holder (40) and the lining carrier holder (40) has at least one recess (42) corresponding with an opening (4, 4') of the lining carrier (1), **characterised in that** the recess (42) is constructed for reception of the material section (5, 5'), which is associated with the opening (4; 4'), of the lining carrier (1).

15. Lining carrier holder according to claim 14, **characterised in that** the at least one recess (42) has a support surface (17) for the material section (5, 5') of the lining carrier (1), which support surface is preferably arranged at a predetermined angle relative to the boundary surface of the opening (4; 4').

16. Lining carrier holder according to claim 14 or 15, **characterised in that** the at least one recess (42) is constructed in such a manner that, during the pressing process, friction material pressed through the opening (4, 4') is formable into a shape-locking element (16) mechanically positively retaining the friction lining (3) at the lining carrier (1).

17. Lining carrier holder according to claim 15 or 16, **characterised in that** the at least one recess (42) is constructed for forming a thickening, preferably a rivet head (16'), protruding beyond the opening (4; 4') of the lining carrier (1).

## Revendications

1. Support de garniture (1) d'un frein à tambour, comprenant une surface de support (2) pour recevoir au moins une garniture de frein (3) et au moins une ouverture (4, 4') pratiquée à l'intérieur de la surface de support (2), qui est produite par façonnage, de préférence par cintrage, d'une portion de matériau (5, 5') du support de garniture (1), la portion de matériau (5, 5') étant façonnée par rapport au support de garniture (1) de telle sorte que, dans le cas d'une compression de la garniture de friction (3) sur la surface de support (2), la portion de matériau (5, 5') forme conjointement avec l'ouverture (4, 4') une matrice de pressage (6), **caractérisé en ce que** la portion de matériau (5, 5') fait saillie hors du support de garniture (1) suivant un angle prédéterminé α dans la direction de pressage (7).

2. Support de garniture selon la revendication 1, **caractérisé en ce que** l'angle prédéterminé α entre le support de garniture (1) et la portion de matériau (5, 5') est compris entre 10° et 60°, de préférence entre 25° et 45°.

3. Support de garniture selon la revendication 1 ou 2, **caractérisé en ce que** l'angle α est variable.

4. Support de garniture selon l'une quelconque des revendications précédentes, **caractérisé en ce que** plusieurs ouvertures (4 ; 4') et portions de matériau (5 ; 5') sont prévues, lesquelles sont de préférence disposées en au moins une rangée (14 ; 14').

5. Support de garniture selon la revendication 4, **caractérisé en ce que** dans la rangée (14 ; 14'), l'agencement de la portion de matériau (5 ; 5') et de l'ouverture associée (4, 4') est sensiblement identique.

6. Support de garniture selon la revendication 4 ou 5, **caractérisé en ce qu'**au moins deux rangées (14, 14') sont pourvues d'un agencement orienté dans le même sens d'une ouverture (4, 4') et d'une portion de matériau associée (5, 5').

7. Support de garniture selon la revendication 4 ou 5, **caractérisé en ce qu'**au moins deux rangées sont pourvues d'un agencement orienté dans des sens opposés d'une ouverture et d'une portion de matériau associée.

8. Support de garniture selon l'une quelconque des revendications 4 à 7, **caractérisé en ce que** les ouvertures (4, 4') sont disposées au moins dans la région de bord de la garniture de frein (3), et sont de préférence adjacentes au bord de la garniture de frein (3).

9. Support de garniture selon l'une quelconque des revendications 4 à 8, **caractérisé en ce que** l'au moins une rangée (14 ; 14') ou les au moins deux rangées (14, 14') s'étendent dans la direction de l'axe longitudinal (15) du support de garniture (1).

10. Support de garniture selon l'une quelconque des revendications précédentes, **caractérisé en ce que** l'au moins une portion de matériau (5 ; 5') est réalisée sous forme de patte dont le contour est produit de préférence au moyen d'un procédé de séparation, notamment par estampage ou découpage.

11. Support de garniture selon l'une quelconque des revendications précédentes, **caractérisé en ce qu'**il est réalisé avec une forme courbe.

12. Unité de support et de garniture de frein (30) d'un frein à tambour comprenant un support de garniture (1) présentant au moins une ouverture (4, 4') selon l'une quelconque des revendications précédentes, et une garniture de friction (3) produite sur le support de garniture (1) par pressage de matériau de friction, **caractérisée en ce que** le matériau de friction est pressé à travers l'ouverture (4, 4') et est formé en forme d'élément d'engagement positif (16) retenant la garniture de friction (3) par engagement positif sur le support de garniture (1).

13. Unité de support et de garniture de frein selon la revendication 12, **caractérisée en ce que** l'élément d'engagement positif (16) présente un épaississement dépassant de l'ouverture (4, 4'), de préférence sous forme de tête de rivet (16').

14. Dispositif de maintien de support de garniture (40) d'un dispositif de pressage pour fabriquer une garniture de friction (3) sur un support de garniture, dans lequel un support de garniture (1) selon l'une quelconque des revendications 1 à 11 peut être posé sur le dispositif de maintien de support de garniture (40) et le dispositif de maintien de support de garniture (40) présente au moins un évidement (42) qui correspond à une ouverture (4, 4') du support de garniture (1), **caractérisé en ce que** l'évidement (42) est réalisé pour recevoir la portion de matériau (5, 5') du support de garniture (1) associée à l'ouverture (4; 4').

15. Dispositif de maintien de support de garniture selon la revendication 14, **caractérisé en ce que** l'au moins un évidement (42) présente une surface d'appui (17) pour la portion de matériau (5, 5') du support de garniture (1), laquelle est de préférence disposée suivant un angle prédéfini par rapport à la surface de bordure de l'ouverture (4; 4').

16. Dispositif de maintien de support de garniture selon la revendication 14 ou 15, **caractérisé en ce que** l'au moins un évidement (42) est réalisé de telle sorte que lors de l'opération de pressage, le matériau de friction poussé à travers l'ouverture (4, 4') peut être formé en forme d'élément d'engagement positif (16) retenant la garniture de friction (3) par engagement positif sur le support de garniture (1).

17. Dispositif de maintien de support de garniture selon la revendication 15 ou 16, **caractérisé en ce que** l'au moins un évidement (42) est réalisé pour former un épaississement dépassant de l'ouverture (4 ; 4') du support de garniture (1), de préférence une tête de rivet (16').
